# EUROPÄISCHE PATENTSCHRIFT

(11) **EP 0 987 405 B1**
(45) Veröffentlichungstag und Bekanntmachung des Hinweises auf die Patenterteilung: **12.11.2003**
(21) Anmeldenummer: 99114410.6
(22) Anmeldetag: 22.07.1999
(51) Int. Cl.: F01L 1/02

(54) **Kettentrieb für Brennkraftmaschinen**
Chain drive for internal combustion engine
Transmission par chaine pour moteur à combustion interne

(30) Priorität: 18.09.1998 DE 19842723
(43) Veröffentlichungstag der Anmeldung: 22.03.2000
(73) Patentinhaber: Dr.Ing. h.c.F. Porsche Aktiengesellschaft, 70435 Stuttgart (DE)
(72) Erfinder: Rapp, Hermann, 71735 Eberdingen (DE); Gröger, Klaus, 71282 Hemmingen (DE)

(56) Entgegenhaltungen:
- EP-A- 0 656 464
- GB-A- 2 143 926
- US-A- 5 743 228

## Beschreibung

Die Erfindung bezieht sich auf einen Kettentrieb für Brennkraftmaschinen nach dem Oberbegriff des Patentanspruchs 1.

Es ist bekannt, EP 0 656 464 A1, an einer Brennkraftmaschine einen Kettentrieb zwischen einer Kurbelwelle und einer Nockenwelle vorzusehen, wobei an einem Lostrum und an einem Lasttrum einer Kette des Kettentriebs eine Spannschiene bzw. eine Gleitschiene anliegt. Dabei sind die Spannschiene und die Gleitschiene jeweils auf einer ersten Seite mit Bolzen gelenkig gelagert und auf einer zweiten Seite dieser Schienen greift jeweils eine Stelleinrichtung an.

Bei einem bekannten Kettentrieb, DE 36 23 903 C1, wirkt eine Spannschiene mit einem Lasttrum der Kette unter Vermittlung einer Spannvorrichtung zusammen. Eine weitere Schiene ist als Kettenführung für ein Lasttrum ausgebildet und lagemäßig festgelegt.

Eine vergleichbare Ausführung geht ferner aus der DE 34 17 100 A1 hervor, wobei zum Ausgleich von Fertigungstoleranzen des Motorgehäuses Schienen des Kettentriebs quer zur Kettenlängsrichtung schwimmend gelagert sind.

Die DE 37 06 136 C1 schließlich behandelt einen Kettenspanner zum Führen und Spannen einer Kette, der aus Kunststoff besteht. Dieser Spanner weist einen Gleitbelag aus verschleißfestem und einem Träger aus biegesteifem Werkstoff z. B. Polyamid auf.

Keine der vorgenannten Litraturstellen vermittelt Kenntnisse oder gibt Hinweise darauf, wie übliche Bauteiltoleranzen des Kettentriebes, insbesondere bezüglich des Abstandes zwischen den Kettenrädern, und/oder der Kette mit vertretbarem Aufwand ausgeglichen werden können.

Aufgabe der Erfindung ist es daher, solche Vorkehrungen an den Schienen, insbesondere an der Gleitschiene und/oder der Spannschiene des Kettentriebs zu treffen, daß Bauteiltoleranzen, hervorgerufen entweder durch Fertigungs- oder durch Verschleißeinflüssen problemlos kompensierbar sind.

Erfindungsgemäß wird diese Aufgabe durch die Merkmale des Patentanspruchs 1 gelöst. Weitere die Erfindung ausgestaltende Merkmale sind in den nachfolgenden Ansprüchen enthalten.

Die mit der Erfindung hauptsächlich erzielten Vorteile sind darin zu sehen, daß mit den beiden Stelleinrichtungen zum einen Maßabweichungen von der Konstruktionslage in einfacher Weise kompensiert werden können und zum anderen eine gezielte Spannfunktion an der Kette gewährleistet ist. Dabei wird mit der Festsetzeinrichtung eine Voreinstellung zur Reduktion der Bauteiltoleranzen des Kettentriebs vorgenommen, wohingegen die Spanneinrichtung im wesenlichen den eigentlichen Spannbereich abdeckt. Bei der Gestaltumg der Spanneinrichtung und der Festsetzeinrichtung können bewährte maschinenbauliche Prinzipien angewandt werden. Mit dem Aufnahmeabschnitt der Festsetzeinrichtung wird zugleich die Führung Gleitschiene in ihrer Querrichtung unterstützt.

Eine räumlich günstige Ausbildung und Lagerung der beiden Schienen wird dadurch erreicht, daß die Bolzen außerhalb des Kettentriebs liegen. Sinngemäß gilt dies auch für die Anordnung der Festsetzeinrichtung d.h. an der Kette zwischen den Kettenrädern. Die Schienen weisen jeweils eine aus gegenläufigen Bögen zusammengesetzte Formkonzeption auf, die besonders für einen Kettentrieb mit zwei Kettenrädern geeignet ist, da sie sich an die vorgegebenen Raumverhältnisse leicht anpassen läßt. Schließlich bestehen die Schienen aus geeignetem Kunststoff, was sich kosten- und gewichtsreduzierend auswirkt.

In der Zeichnung ist ein Ausführungsbeispiel der Erfindung dargestellt, das nachstehend näher beschrieben ist.

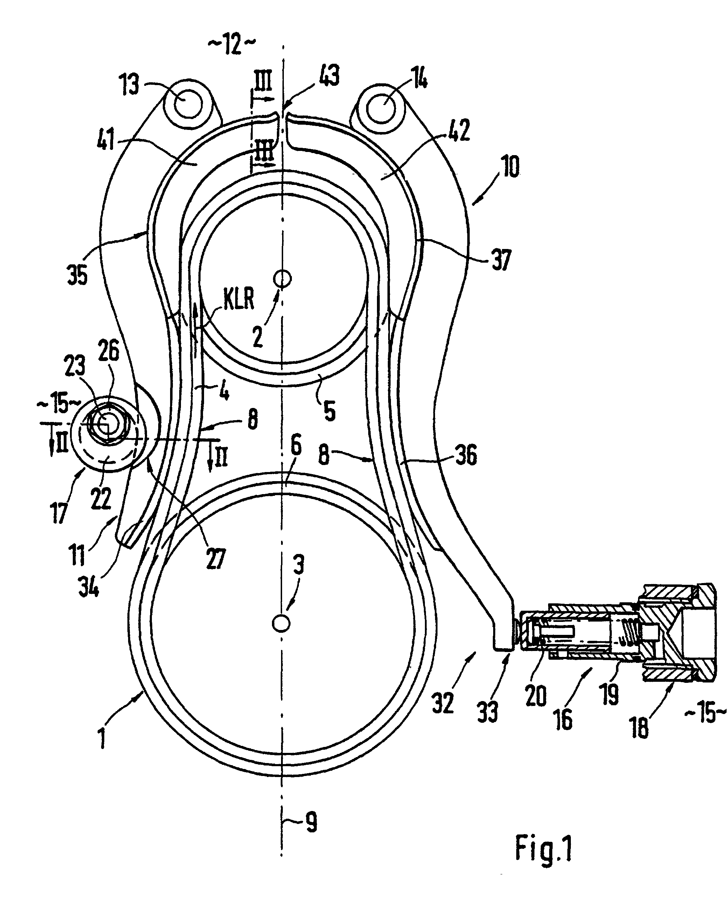

Es zeigen
- Fig. 1: eine Ansicht von vorne auf einen Kettentrieb einer Brennkraftmaschine,
- Fig. 2: einen Schnitt nach der Linie II - II der Fig.1 und
- Fig. 3: einen Schnitt nach der Linie III III der Fig.1

Bei dem im Ausführungsbeispiel dargestellten Kettentrieb 1 ist der Kettentrieb 1 zwischen einer Kurbelwelle 2 und einer Nebenwelle 3 oder einer Nockenwelle - einer nicht näher gezeigten Brennkraftmaschine wirksam und umfaßt eine Kette 4 und Kettenräder 5 und 6. Mit 7 ist ein Lostrum und mit 8 ist ein Lasttrum des Kettentriebs 1 bezeichnet Die Kurbelwelle 2 und die Nebenwelle 3 liegen auf einer senkrechten Konstruktionslinie 9, die im Ausführungsbeispiel eine Mittellängslinie der Brennkraftmaschine einschließt. Die Nebenwelle 3 ist in der gezeigten Ausführungsform unterhalb der Kurbelwelle 2 angeordnet.

Am Lostrum 7 der Kette 4 liegt eine Spannschiene 10 an, am Lasttrum 8 der Kette 4 liegt eine Gleitschiene 11 an. Die Spannschiene 10 und die Gleitschiene 11 sind jeweils auf einer ersten Seite 12, und zwar oberhalb des Kettenrads 5 mit einem Bolzen 13 und 14 gelagert. Auf einer zweiten Seite 15, die gegenüber der ersten Seite 12 beabstandet ist, greift an der Spannschiene 10 und der Gleitschiene 11 jeweils eine Stelleinrichtung 16 bzw. 17 an. Durch diese Ausbildung nehmen die Schienen 10 und 11 eine hängende Lage ein. Die Stelleinrichtung 16 der Spannschiene 10 ist eine Spanneinrichtung 18, die einen feststehenden Zylinder 19 und einen Betätigungskolben 20 besitzt, kann hydraulischer Bauart sein. Demgegenüber ist die Stelleinrichtung 17 der Gleitschiene 11 eine Festsetzeinrichtung 21, die einen mit der Gleitschiene 11 zusammenarbeitenden Exzenter 22 aufweist. Der Exzenter 22 ist auf einem Lagerbolzen 23 angeordnet, der mittels eines ersten Gewindes 24 in ein Gehäuse 25 der Brennkraftmaschine eingedreht ist. Die Lage des Exzenters 22 wird über eine Schraubenmutter 26, die ein zweites Gewinde des Lagerbolzens umgibt, fesgelegt. Der Exzenter 21 ist auf einem der Gleitschiene 11 zugkehrten Bereich 27 mit einem Aufnahmeabschnitt 28 für einen Lagerabschnitt 29 der besagten Gleitschiene versehen. Der Aufnahmeabschnit 28 weist einen U-förmigen Querschnitt 30 auf in den der Lagerabschnitt 29 mit einem korrespondierenden Endstück 31 eingreift. Die Festsetzeinrichtung 21 bzw. der Exzenter 22 ist zwischen den Kettenrädern 5,6 an die Gleitschiene 11 herangeführt, wobei die Gleitschiene 11 dort mit der Kette 4 in Verbindung steht.

Die Spanneinrichtung 18 greift entfernt vom Bolzen 13 am freien Ende 32 der Spannschiene 10 an. Dabei ist ein Stützteil 33 - benachbart diesem freien Ende 32 - der Spannschiene 10 für die Spanneinrichtung 18 von der Kette 4 weggeführt.

Die Gleitschiene 10 und die Spannschiene 11 weisen in ihren Längsrichtungen gesehen - jeweils eine aus zwei gegenläufigen Bögen 32, 33 bzw. 34, 35 bestehende Formkonzeption auf, wodurch die Gleitschiene 10 eine S-Form erhält und sich abschnittsweise an den Verlauf des Kettentriebs 1 anpaßt. Die Spannschiene 11 ist in etwa spiegelbildlich ausgführt und erfüllt eine vergleichbare Funktion. Die Gleitschiene 10 und die Spannschiene 11 können über ihre Länge gesehen ähnliche oder gleiche Formverläufe aufweisen.

Zumindest die Gleitschiene 10 kann aus Kunstoff bestehen und einen Gleitbelag 38 und einen Träger 39 umfassen. Dabei besteht der Träger 39 aus hartem und der Gleitbelag 38 aus verschleißfestem Werkstoff. Näheres hierzu ist der bereits genannten DE 37 06 136 C 1 zu entnehmen. Die Gleitschiene 10 ist auf dem mit der Festsetzsetzeinrichtung 20 bzw. dem Exzenter 21 zusammenwirkenden Bereich 38 mit einem Belag 39 versehen, der wie der Gleitbelag 36 aus verschleißfestem Kunststoff besteht und am Träger 37 in Lage gehalten wird.

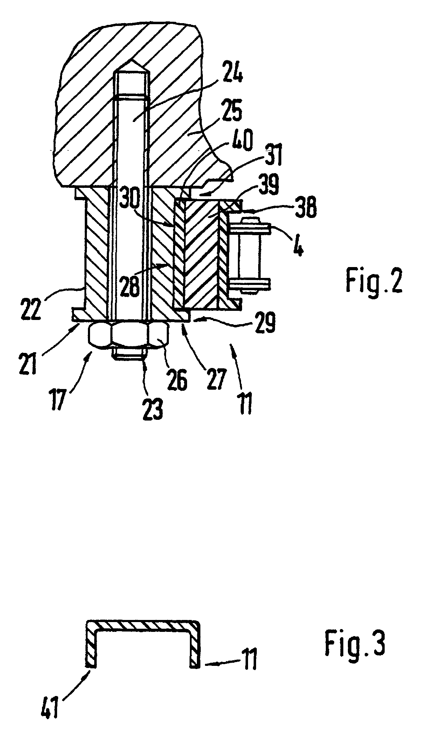

Die Funktion der Gleitschiene 10 und der Spannschiene 11 wird dadurch erweitert, daß diese Schienen mit Ölleitvorrichtungen 41 und 42 für in Kettenlaufrichtung KLR hochgeschleudertes Öl versehen sind. Die Ölleitvorrichtungen 41 und 42 umgeben abschnittsweise das obere Kettenrad 5 und enden in der Nähe der Konstuktionslinie 9, wobei zwischen besagten Ölleitvorrichtungen ein relativ kleiner Zwischenraum 43 verbleibt. Die Ölleitvorrichtungen 41 und 42 sind im Querschnitt U-förmig gestaltet - Fig. 3 - was die angestrebte Wirkungsweise unterstützt.

## Patentansprüche

1. Kettentrieb für Brennkraftmaschinen, insbesondere zum Antrieb von einer oder mehreren Nockenwellen/Nebenwellen oder dgl. an solchen Maschinen, wobei am Lostrum und am Lasttrum einer Kette (22) des Kettentriebs eine Spannschiene (10) bzw. Gleitschiene (11) anliegt, welche Spannschiene (10) und Gleitschiene (11) jeweils auf einer ersten Seite (12) mit Bolzen (13, 14) gelagert sind und auf einer zweiten Seite (15) dieser Schienen (10, 11) jeweils eine Stelleinrichtung (16, 17) angreift, **dadurch gekennzeichnet, dass** die Stelleinrichtung (17) der Gleitschiene (11) eine Festsetzeinrichtung (21) ist und dass die genannte Festsetzeinrichtung (21) einen Exzenter (22) umfasst, der mit der Gleitschiene (11) zusammenarbeitet.

2. Kettenantrieb nach Anspruch 1, **dadurch gekennzeichnet, daß** der Exzenter (22) auf einem der Gleitschiene (11) zugekehrten Bereich (27) einen Aufnahmeabschnitt (28) für einen Lagerabschnitt (29) der Gleitschiene (11) aufweist.

3. Kettentrieb nach Anspruch 2, **dadurch gekennzeichnet, daß** der Aufnahmeabschnitt (28) einen U-förmigen Querschnitt (30) aufweist der, in den Lagerabschnitt (29) mit einem korrespondierenden Endstück (31) eingreift.

4. Kettentrieb nach einem oder mehreren der vorangehenden Ansprüche bei dem zwei Wellen mit von der Kette umschlungenen Kettenrädern vorgesehen sind, **dadurch gekennzeichnet, daß** die Bolzen (13 und 14) der Spannschiene (10) und der Gleitschiene (11) oberhalb des Kettentriebs (1) liegen.

5. Kettentrieb nach einem oder mehreren der vorangehenden Ansprüche, **dadurch gekennzeichnet, daß** die Festsetzeinrichtung (21) an der Gleitschiene (11) zwischen den beabstandeten Kettenrädern (5 und 6) angreift.

6. Kettentrieb nach Anspruch 5, **dadurch gekennzeichnet, daß** die Gleitschiene (11) im Bereich der Festsetzeinrichtung (21) mit der Kette (4) in Verbindung steht.

7. Kettentrieb nach einem oder mehreren der vorangehenden Ansprüche, **dadurch gekennzeichnet, daß** die Spanneinrichtung (18) im Bereich des vom Bolzen (14) entfernt liegenden unteren Kettenrades (6) an der Spannschiene (10) angreift, wobei ein Stützteil (33) der Spannschiene (11), an dem die Spanneinrichtung (17) anliegt, von der Kette (4) weggeführt ist.

8. Kettentrieb nach einem oder mehreren der vorangehenden Ansprüche, **dadurch gekennzeichnet, daß** sowohl die Gleitschiene (10) wie auch die Spannschiene (11) in Längsrichtung gesehen eine aus zwei gegenläufigen Bögen (34, 35 und 36, 37) bestehende Formkonzeption aufweisen.

9. Kettentrieb nach Anspruch 8, **dadurch gekennzeichnet, daß** die Gleitschiene (10) und die Spannschiene (11) zumindest über einen wesentlichen Teilbereich ihrer Länge vergleichbare Formverläufe aufweisen.

10. Kettentrieb nach einem oder mehreren der vorangehenden Ansprüche, mit Spann- und/oder Gleitschienen, die aus Kunststoff bestehen, wobei jede Schiene einen Gleitbelag und einen Träger mit unterschiedlichen Werkstoffspezifikationen aufweist, dergestalt, daß der Träger aus hartem und der Belag aus verschleißfestem Wekstoff besteht, **dadurch gekennzeichnet, daß** die Gleitschiene (10) auf dem mit der Festsetzeinrichtung (21) zusammenwirkenden Bereich abschnittsweise mit einem Belag (40) aus verschleißfestem Kunststoff versehen ist.

11. Kettentrieb nach einem oder mehreren der vorangehenden Ansprüche, **dadurch gekennzeichnet, daß** benachbart eines Kettenrads (z. B. 5) des Kettentriebs (1) beide Schienen (10 und 11) abschnittsweise mit die Kette (4) umgebenden Ölleitvorrichtungen (41 und 42) versehen sind.

12. Kettentrieb nach Anspruch 11, **dadurch gekennzeichnet, daß** die Ölleitvorrichtungen (41 und 42) der Schienen (10 und 11) im Querschnitt U-förmig gestaltet sind.

## Claims

1. A chain drive for internal-combustion engines, in particular for driving one or more camshafts / auxiliary shafts or the like on such engines, wherein a tensioning rail (10) and a sliding rail (11) rest against the loose run and the loaded run respectively of a chain (22) of the chain drive, the tensioning rail (10) and the sliding rail (11) being mounted in each case on a first side (12) with pins (13, 14) and a setting device (16, 17) engaging in each case on a second side (15) of the said rails (10, 11), **characterized in that** the setting device (17) of the sliding rail (11) is a fixing device (21) and the said fixing device (21) comprises an eccentric (22) which co-operates with the sliding rail (11).

2. A chain drive according to Claim 1, **characterized in that** in a region (27) facing the sliding rail (11) the eccentric (22) has a receiving portion (28) for a mounting portion (29) of the sliding rail (11).

3. A chain drive according to Claim 2, **characterized in that** the receiving portion (28) has a U-shaped cross-section (30) into which the mounting portion (29) engages with a corresponding end piece (31).

4. A chain drive according to one or more of the preceding Claims, in which two shafts with chain wheels around which the chain passes are provided, **characterized in that** the pins (13 and 14) of the tensioning rail (10) and the sliding rail (11) are situated above the chain drive (1).

5. A chain drive according to one or more of the preceding Claims, **characterized in that** the fixing device (21) engages on the sliding rail (11) between the spaced chain wheels (5 and 6).

6. A chain drive according to Claim 5, **characterized in that** the sliding rail (11) is connected to the chain (4) in the region of the fixing device (21).

7. A chain drive according to one or more of the preceding Claims, **characterized in that** the tensioning device (18) engages on the tensioning rail (10) in the region of the lower chain wheel (6) situated at a distance from the pin (14), wherein a support part (33) of the tensioning rail (11), against which the tensioning device (17) rests, extends away from the chain (4).

8. A chain drive according to one or more of the preceding Claims, **characterized in that** both the sliding rail (10) and the tensioning rail (11) have a form design comprising two arcs (34, 35 and 36, 37) facing in opposite directions as viewed in the longitudinal direction.

9. A chain drive according to Claim 8, **characterized in that** the sliding rail (10) and the tensioning rail (11) have comparable shapes at least over a substantial part of their length.

10. A chain drive according to one or more of the preceding Claims, with tensioning and/or sliding rails which consist of plastics material, wherein each rail has a sliding lining and a support with different material properties, in such a way that the support consists of hard material and the lining consists of wear-resistant material, **characterized in that** in the region co-operating with the fixing device (21) the tensioning rail (10) is provided in part with a lining (40) of wear-resistant plastics material.

11. A chain drive according to one or more of the preceding Claims, **characterized in that** adjacent to one chain wheel (for example 5) of the chain drive (1) the two rails (10 and 11) are provided in part with oil-conveying devices (41 and 42) surrounding the chain (4).

12. A chain drive according to Claim 11, **characterized in that** the oil-conveying devices (41 and 42) of the rails (10 and 11) are U-shaped in cross-section.

## Revendications

1. Transmission par chaîne pour moteurs à combustion interne, en particulier pour l'entraînement d'un ou plusieurs arbres à cames/arbres secondaires ou analogues dans de tels moteurs, un rail tendeur (10) ou une glissière (11) s'appuyant sur le brin lâche et sur le brin libre d'une chaîne (22) de la transmission par chaîne, lesquels rails tendeurs (10) et glissière (11) sont logés chacun d'un premier côté (12) à l'aide de boulons (13, 14) et un dispositif de réglage (16, 17) s'engrène respectivement d'un second côté (15) de ces glissières (10, 11), **caractérisée en ce que** le dispositif de réglage (17) de la glissière (11) est un dispositif de serrage (21) et **en ce que** ledit dispositif de serrage (21) comprend un excentrique (22) qui coopère avec la glissière (11).

2. Transmission par chaîne selon la revendication 1, **caractérisée en ce que** l'excentrique (22) comporte, dans une zone (27) tournée vers la glissière (11), une section de logement (28) pour une section de palier (29) de la glissière (11).

3. Transmission par chaîne selon la revendication 2, **caractérisée en ce que** la section de logement (28) présente une section transversale (30) en forme de U qui s'engrène dans la section de palier (29) avec un embout correspondant (31).

4. Transmission par chaîne selon l'une ou plusieurs de revendications précédentes, dans laquelle sont prévus deux arbres avec des roues à chaîne sur lesquelles la chaîne est enroulée, **caractérisée en ce que** les boulons (13 et 14) du rail tendeur (10) et de la glissière (11) sont placés au-dessus de la transmission par chaîne (1).

5. Transmission par chaîne selon l'une ou plusieurs de revendications précédentes, **caractérisée en ce que** le dispositif de serrage (21) s'engrène dans la glissière (11) entre les roues à chaîne (5 et 6) placées à distance l'une de l'autre.

6. Transmission par chaîne selon la revendication 5, caractérisée en que la glissière (11) est raccordée à la chaîne (4) dans la zone du dispositif de serrage (21).

7. Transmission par chaîne selon l'une ou plusieurs de revendications précédentes, **caractérisée en ce que** le dispositif tendeur (18) s'engrène dans le rail tendeur (10) dans la zone de la roue à chaîne (6) inférieure éloignée du boulon (14), une pièce d'appui (33) du rail tendeur (10), sur laquelle s'appuie le dispositif tendeur (17), étant emmenée par la chaîne (4).

8. Transmission par chaîne selon l'une ou plusieurs de revendications précédentes, **caractérisée en ce que**, aussi bien le rail tendeur (10) que la glissière (11), présentent, dans le sens longitudinal, une conception structurale constituée de deux courbures opposés (34, 35 et 36, 37).

9. Transmission par chaîne selon la revendication 8, **caractérisée en ce que** la glissière (11) et le rail tendeur (10) présentent des tracés structuraux comparables au moins sur une zone partielle importante de leur longueur.

10. Transmission par chaîne selon l'une ou plusieurs de revendications précédentes, avec des rails tendeurs et/ou des glissières qui sont constitués de matière plastique, chaque glissière comportant un revêtement de glissière et un support avec différentes spécifications de matériaux, de sorte que le support est constitué d'un matériau dur et le revêtement d'un matériau résistant à l'usure, **caractérisée en ce que** la glissière (11) est munie, par tronçons, d'un revêtement (40) en matière plastique résistant à l'usure dans la zone coopérant avec le dispositif de serrage (21).

11. Transmission par chaîne selon l'une ou plusieurs de revendications précédentes, **caractérisée en ce que**, à proximité d'une roue à chaîne (par exemple 5) de la transmission par chaîne (1), les deux glissières (10 et 11) sont munies, par tronçons, de dispositifs de guidage d'huile (41 et 42) entourant la chaîne (4).

12. Transmission par chaîne selon la revendication 11, **caractérisée en ce que** les dispositifs de guidage d'huile (41 et 42) des glissières (10 et 11) sont en forme de U en coupe transversale.
